(19) Europäisches Patentamt
European Patent Office
Office européen des brevets

(11) **EP 2 097 274 B1**

(12) **FASCICULE DE BREVET EUROPEEN**

(45) Date de publication et mention de la délivrance du brevet:
**08.01.2014 Bulletin 2014/02**

(21) Numéro de dépôt: **07858432.3**

(22) Date de dépôt: **12.10.2007**

(51) Int Cl.:
**B44D 2/00** (2006.01)

(86) Numéro de dépôt international:
**PCT/FR2007/001668**

(87) Numéro de publication internationale:
**WO 2008/043919 (17.04.2008 Gazette 2008/16)**

(54) **PROCEDE ET DISPOSITIFS DE PROJECTION DE MOTIFS BIDIMENSIONNELS SUR DES SURFACES COMPLEXES D'OBJETS TRIDIMENSIONNELS**

VERFAHREN UND VORRICHTUNG ZUR PROJEKTION ZWEIDIMENSIONALER MUSTER AUF KOMPLEXE OBERFLÄCHEN DREIDIMENSIONALER OBJEKTE

METHOD AND DEVICES FOR PROJECTING TWO-DIMENSIONAL PATTERNS ONTO COMPLEX SURFACES OF THREE-DIMENSIONAL OBJECTS

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **12.10.2006 FR 0654246**

(43) Date de publication de la demande:
**09.09.2009 Bulletin 2009/37**

(73) Titulaire: **Airbus Operations**
**31060 Toulouse (FR)**

(72) Inventeurs:
• **SARAILLE, Francis**
**31330 Merville (FR)**
• **JEANNIN, Henri**
**31830 Plaisance du Touch (FR)**

(74) Mandataire: **Petit, Maxime**
**Santarelli**
**14, Avenue de la Grande Armée**
**BP 237**
**75822 Paris Cedex 17 (FR)**

(56) Documents cités:
**EP-A1- 0 593 340     US-A- 5 436 027**
**US-A- 5 566 286**

**Description**

La présente invention concerne la décoration d'objets tridimensionnels et plus particulièrement un procédé et des dispositifs d'aide à la modélisation des décorations d'objets tridimensionnels à partir d'une représentation bidimensionnelle de ces décorations.

La projection d'une image bidimensionnelle sur un objet tridimensionnel est couramment utilisée dans de nombreuses industries pour décorer ces objets. La complexité de ce problème varie selon la nature de l'objet tridimensionnel et la nature de la surface de projection. Ainsi, alors que la projection d'une image bidimensionnelle sur une surface continue de faibles dimensions telle que la surface extérieure d'une canette ne pose pas de problème particulier, la projection d'un logo, d'un symbole ou d'un nom sur la surface extérieur d'un avion pose de nombreux problèmes. En particulier, la complexité de la forme de la surface de projection, le facteur d'échelle entre l'image reproduite et l'image d'origine ainsi que la présence de certains éléments particuliers sur lesquels il est nécessaire de peindre ou de ne pas peindre certaines partie de l'image bidimensionnel à reproduire, tels que les hublots, rendent la tâche difficile.

La décoration des avions a généralement pour but de porter l'image commerciale des compagnies aériennes et comprend souvent la peinture de noms, signes et logos qui doit être parfaitement réalisée. L'adaptation du modèle de la compagnie aérienne aux formes particulières de chaque avion est généralement basée sur l'expérience et sur une analyse empirique. La validation de cette adaptation est souvent liée à la réalisation de maquettes. Ce processus présente de nombreux inconvénients, particulièrement en terme de coûts et de délais.

Le brevet européen EP 0 593 340 divulgue un procédé et un dispositif d'aide à la décoration d'un objet tridimensionnel. Le procédé consiste à représenter un modèle en trois dimensions de l'objet décoré par un tracé de la décoration. Il consiste ensuite à localiser sur l'objet, à partir du modèle 3D, au moins certains points caractéristiques dudit tracé pour positionner, par exemple, des rubans adhésifs de délimitation de la décoration ou des pochoirs, ou des éléments décoratifs prédécoupés, etc.. Cette invention s'applique notamment à la décoration d'un avion par des logos, lettres ou signes distinctifs sur la surface externe de cet avion.

Bien que ce procédé permette de modéliser les décorations devant être reproduites sur un avion, la transformation de l'image bidimensionnelle en image tridimensionnelle adaptée à la surface de l'avion se fait par projection conique par rapport à des points de visée et adaptation de la projection.

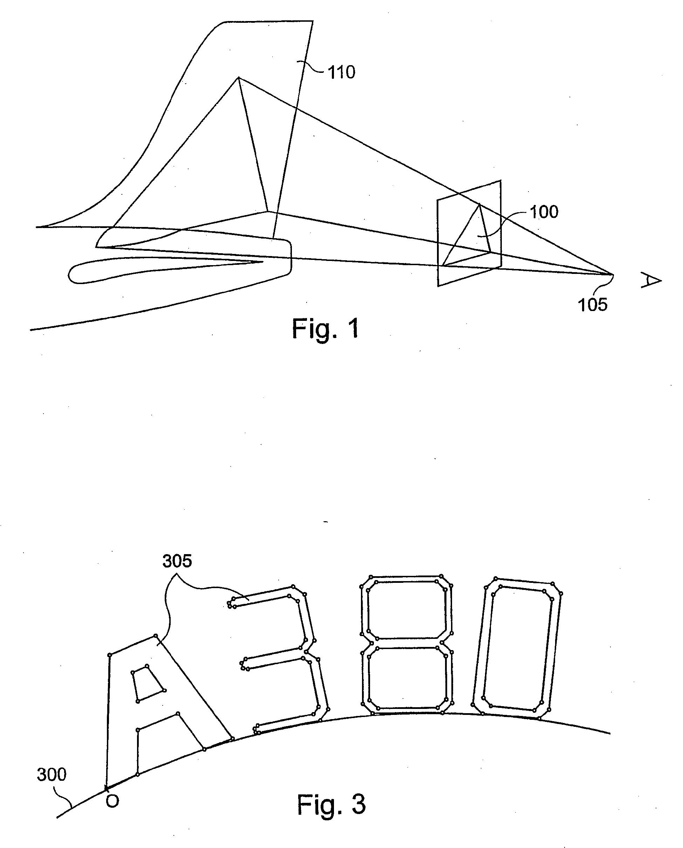

La figure 1 illustre un exemple de projection conique permettant de reproduire une image bidimensionnelle sur la surface extérieure d'un avion. La projection de l'image 100 à partir du point de projection 105 sur l'empennage vertical d'un avion 110 montre les problèmes liés à une projection conique sur une partie évolutive de la surface extérieure d'un avion telle que la jonction entre l'empennage vertical et le fuselage.

Il existe donc un besoin pour obtenir directement une projection d'une image bidimensionnelle sur un objet tridimensionnel ayant une surface complexe, sans nécessité d'adaptation, en particulier sur les zones évolutives.

L'invention permet de résoudre au moins un des problèmes exposés précédemment.

L'invention a ainsi pour objet un procédé pour projeter un motif bidimensionnel sur la surface d'un objet tridimensionnel, ce procédé comprenant les étapes suivantes,

- définition d'au moins une courbe d'origine sur le motif bidimensionnel et d'au moins une courbe de projection sur la surface de l'objet tridimensionnel, les courbes d'origine et de projection ayant chacune un point d'origine ;
- détermination d'au moins un ratio de projection ;
- sélection d'un point du motif bidimensionnel ;
- détermination d'au moins une abscisse de la projection du point sélectionné selon au moins une abscisse du point sélectionné et selon le ratio de projection ;
- détermination de l'ordonnée de la projection du point sélectionné selon l'ordonnée du point sélectionné et selon le ratio de projection ;
- détermination d'un plan d'ordonnée comprenant le point de la courbe de projection déterminé par l'abscisse de la projection du point sélectionné ; et,
- détermination de la projection du point sélectionné sur la surface de l'objet tridimensionnel selon l'ordonnée de la projection du point sélectionné, l'intersection de la surface de l'objet tridimensionnel avec le plan d'ordonnée et la courbe de projection.

L'invention permet ainsi d'optimiser le transfert du motif bidimensionnel sur la surface d'un objet tridimensionnel en réduisant les déformations liées aux parties évolutives de la surface de l'objet tridimensionnel.

Avantageusement, un second ratio est utilisé pour transférer le motif bidimensionnel avec des ratios différents selon chaque direction.

De préférence, les tangentes aux points sélectionnés sont également transférées pour améliorer la qualité de l'image transférée.

Selon un premier mode de réalisation, le plan d'ordonnée est normal à la courbe de projection.

Selon un second mode de réalisation, le plan d'ordonnée est parallèle à un plan de référence.

Selon un autre mode de réalisation, le plan d'ordonnée est défini par un second point et par une direction prédéterminée. Le second point est avantageusement la projection d'une seconde abscisse du point sélectionné selon une seconde courbe d'origine. De préférence, l'ordonnée de la projection du point sélectionné est définie, en particulier, par le ratio des distances entre le point sélectionné et les points des deux courbes d'origine déterminés par les deux abscisses du point sélectionné.

Selon un mode de réalisation particulier, au moins l'un des points sélectionnés est projeté selon l'un des trois modes de réalisation particulier et au moins un autre point sélectionné est projeté selon au autre mode de réalisation particulier. La projection du motif bidimensionnel est ainsi adaptée à la nature de la surface de l'objet tridimensionnel.

Toujours selon un mode de réalisation particulier, le motif bidimensionnel peut être transformé avant d'être projeté sur la surface de l'objet tridimensionnel ou au cours de la projection. Le motif bidimensionnel peut ainsi être adapté à des besoins particuliers.

L'objet tridimensionnel peut être un objet réel ou un objet numérique tel qu'un modèle utilisé dans un logiciel de conception assistée par ordinateur.

D'autres avantages, buts et caractéristiques de la présente invention ressortent de la description détaillée qui suit, faite à titre d'exemple non limitatif, au regard des dessins annexés dans lesquels :

- la figure 1 illustre un exemple de projection conique permettant de reproduire une image bidimensionnelle sur la surface extérieure d'un avion ;
- la figure 2 montre un exemple d'appareil permettant d'implémenter l'invention ;
- la figure 3 présente un exemple d'image bidimensionnelle à reproduire sur la surface d'un objet tridimensionnel ;
- la figure 4 illustre certaines étapes générales de l'algorithme de projection d'une image bidimensionnelle sur la surface d'un objet tridimensionnel ;
- la figure 5 présente le positionnement d'une courbe de projection sur la surface d'un objet tridimensionnel, ici un empennage vertical d'avion ;
- la figure 6 illustre certaines étapes de l'algorithme de projection de points d'image bidimensionnelle à reproduire sur la surface d'un objet tridimensionnel selon un premier et un deuxième modes de réalisation ;
- la figure 7, comprenant les figures 7a et 7b, présente un exemple de projection de points d'image bidimensionnelle sur la surface d'un empennage vertical d'avion, selon un premier et un deuxième modes de réalisation ;
- la figure 8 illustre certaines étapes de l'algorithme de projection de points d'image bidimensionnelle à reproduire sur la surface d'un objet tridimensionnel selon un troisième mode de réalisation ;
- la figure 9, comprenant les figures 9a et 9b, présente un exemple de projection de points d'image bidimensionnelle sur la surface d'un empennage vertical d'avion, selon un troisième mode de réalisation ; et,
- la figure 10, comprenant les figures 10a et 10b, illustre un mécanisme de projection des tangentes.

La description suivante est basée sur l'exemple de la décoration extérieure d'un avion mais il doit être compris que le procédé et les dispositifs selon l'invention s'appliquent à la décoration de tous les objets tridimensionnels à partir d'une représentation bidimensionnelle de la décoration.

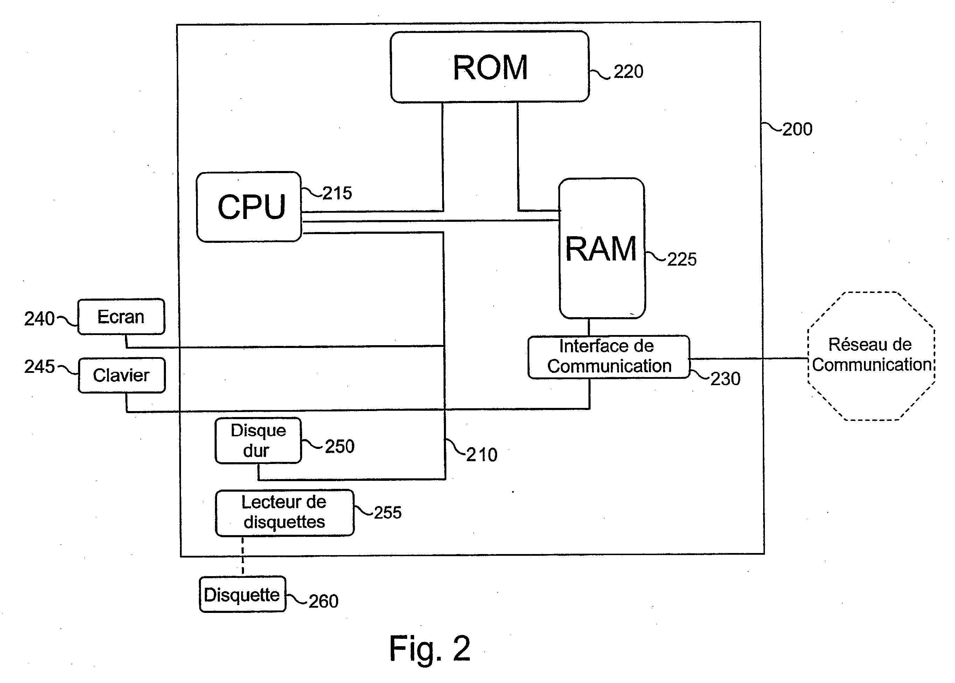

La figure 2 illustre un exemple d'appareil 200 adapté à mettre en oeuvre l'invention. L'appareil 200 est par exemple un micro-ordinateur ou une station de travail capable de se connecter ou non à un réseau de communication. L'appareil 200 comporte un bus de communication 210 auquel sont de préférence reliés :

- une unité centrale de traitement 215 telle qu'un microprocesseur, notée CPU (*Central Processing Unit*) ;
- une mémoire morte 220 pouvant comporter les programmes permettant de mettre en oeuvre l'invention, notée ROM (*Read Only Memory*) ;
- une mémoire vive 225, qui après la mise sous tension contient le code exécutable du procédé suivant l'invention ainsi que des registres adaptés à enregistrer des variables et des paramètres nécessaires à la mise en oeuvre de l'invention, notée RAM (*Random Access Memory*) ; et,
- une interface de communication 230 connectée à un réseau de communication, l'interface étant apte à transmettre et à recevoir des données.

Optionnellement, l'appareil 200 peut disposer également des composantes suivantes :

- un écran 240 permettant de visualiser des données et/ou de servir d'interface graphique avec l'utilisateur qui pourra interagir avec les programmes selon l'invention, à l'aide d'un clavier 245 complété ou non par tout autre moyen tel qu'un dispositif de pointage, comme par exemple une souris, un crayon optique ou encore un écran tactile ;
- un disque dur 250 ou une mémoire de stockage telle qu'une carte compact flash, pouvant comporter les programmes selon l'invention ainsi que des données utilisées ou produites lors de la mise en oeuvre de l'invention ; et,
- un lecteur de disquette 255 (ou tout autre support de données amovible) adapté à recevoir une disquette 260 et à y lire ou y écrire des données traitées ou à traiter selon l'invention.

Le bus de communication permet la communication et l'interopérabilité entre les différents éléments inclus dans l'appareil 200 ou reliés à lui. La représentation du bus n'est pas limitative et, notamment, l'unité centrale est susceptible de communiquer des instructions à tout élément de l'appareil 200 directement ou par l'intermédiaire d'un autre élément de l'appareil 200.

Les disquettes 260 peuvent être remplacées par tout support d'information tel que, par exemple, un disque compact (CD-ROM) réinscriptible ou non, un disque ZIP ou une carte mémoire et d'une manière générale, par un moyen de stockage d'information, lisible par un micro-ordinateur ou par un microprocesseur, intégré ou non à l'appareil, éventuellement amovible et adapté à mémoriser un ou plusieurs programmes dont l'exécution permet la mise en oeuvre du procédé selon l'invention.

Le code exécutable permettant à l'appareil la mise en oeuvre de l'invention peut se trouver indifféremment stocké en mémoire morte 220, sur le disque dur 250 ou sur un support numérique amovible tel que par exemple une disquette 260 telle que décrite précédemment. Selon une variante, le code exécutable des programmes pourra être reçu par l'intermédiaire du réseau de communication, via l'interface 230, pour être stocké dans un des moyens de stockage de l'appareil 200 avant d'être exécuté, tel que le disque dur 250.

L'unité centrale 215 est adaptée à commander et à diriger l'exécution des instructions ou portions de code logiciel du ou des programmes selon l'invention, instructions qui sont stockées dans l'un des moyens de stockage précités. Lors de la mise sous tension, le ou les programmes qui sont stockés dans une mémoire non volatile, par exemple sur le disque dur 250 ou la mémoire morte 220, sont transférés dans la mémoire vive 225 qui contient alors le code exécutable du ou des programmes, ainsi que des registres pour mémoriser les variables et paramètres nécessaires à la mise en oeuvre de l'invention.

Il convient de noter que l'appareil peut également être un appareil programmé. Cet appareil contient alors le code du ou des programmes informatiques par exemple figé dans un circuit intégré à application spécifique (*Application Specific Integrated Circuit* ou ASIC).

La figure 3 représente une image bidimensionnelle devant être reproduite sur la surface d'un objet tridimensionnel, par exemple l'empennage illustré sur la figure 1. L'image bidimensionnelle, ou image source, comprend une courbe 300 et un point d'origine O appartenant à cette courbe. La courbe 300, appelée courbe d'origine dans la suite de la description, est considérée comme étant l'axe des abscisses du repère dans lequel sont définis les points formant l'image à reproduire sur la surface de l'objet tridimensionnel. La courbe d'origine est de préférence liée à l'image bidimensionnelle à reproduire, comme illustrée sur la figure 3, cependant, elle peut être quelconque. Dans l'exemple présenté, l'image à reproduire comprend les lettres « A380 ». L'axe des ordonnées est de préférence choisi comme étant orthogonal à la courbe d'origine au point d'abscisse considéré.

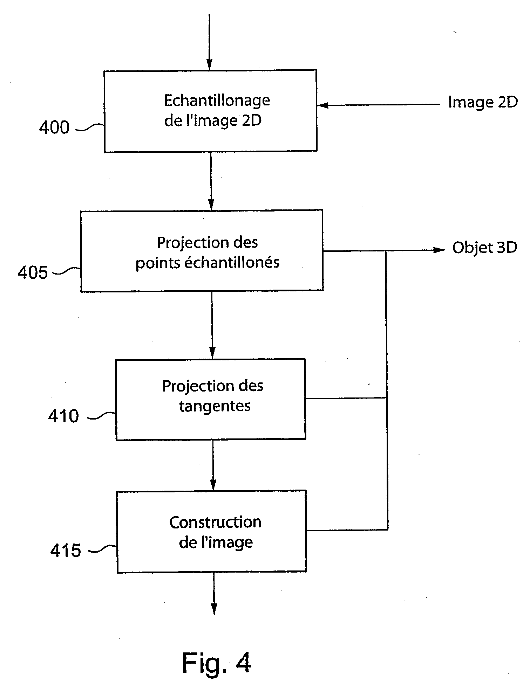

Le procédé selon l'invention peut être décomposé selon les quatre étapes suivantes, illustrées sur la figure 4,

-    échantillonnage de l'image bidimensionnelle à reproduire sur la surface de l'objet tridimensionnel (étape 400) ;
-    projection des points échantillonnés sur la surface de l'objet tridimensionnel (étape 405) ;

-    projection des tangentes aux points échantillonnés sur la surface de l'objet tridimensionnel (étape 410) ; et,
-    construction de l'image sur la surface de l'objet tridimensionnel à partir des points et des tangentes projetés (étape 415).

Il convient de noter que l'étape de transfert des tangentes aux points échantillonnés n'est pas indispensable mais permet généralement d'augmenter la qualité de l'image projetée.

L'image source bidimensionnelle est de préférence constituée de courbes et de points. Les points peuvent être projetés les uns après les autres selon le processus présenté dans la suite de la description. Les courbes, constituant généralement la limite entre deux couleurs différentes, sont avantageusement échantillonnées en définissant une erreur de corde et une distance maximale entre deux points consécutifs. Les points résultants de l'échantillonnage ainsi qu'éventuellement les tangentes aux courbes en ces points, sont projetés, ou reportés, sur la surface de l'objet tridimensionnel afin de reconstituer les courbes par lissage des points projetés. La projection des tangentes, selon le même processus, permet d'affiner la projection de l'image source. L'échantillonnage peut être automatique ou non.

D'autres méthodes d'échantillonnage peuvent être utilisées. Par exemple, l'échantillonnage peut être réalisé de telle sorte que chaque point échantillonné corresponde à un point remarquable, ou point singulier, de l'image source. Un point est considéré comme remarquable ou singulier lorsqu'il correspond à un extremum ou lorsqu'il caractérise une rupture de courbure, telle qu'un changement brutal de direction.

Par soucis de clarté, il est considéré dans la description suivante que les unités des coordonnées sont équivalentes selon toutes les directions, c'est-à-dire, en particulier, que la distance entre l'origine et le point de coordonnées  (1,0) est égale à la distance entre le point d'origine et le point de coordonnées (0,1). Cependant, il est possible d'utiliser des unités différentes.

Plusieurs méthodes peuvent être utilisées pour transférer les points échantillonnés de l'image bidimensionnelle sur la surface de l'objet tridimensionnel.

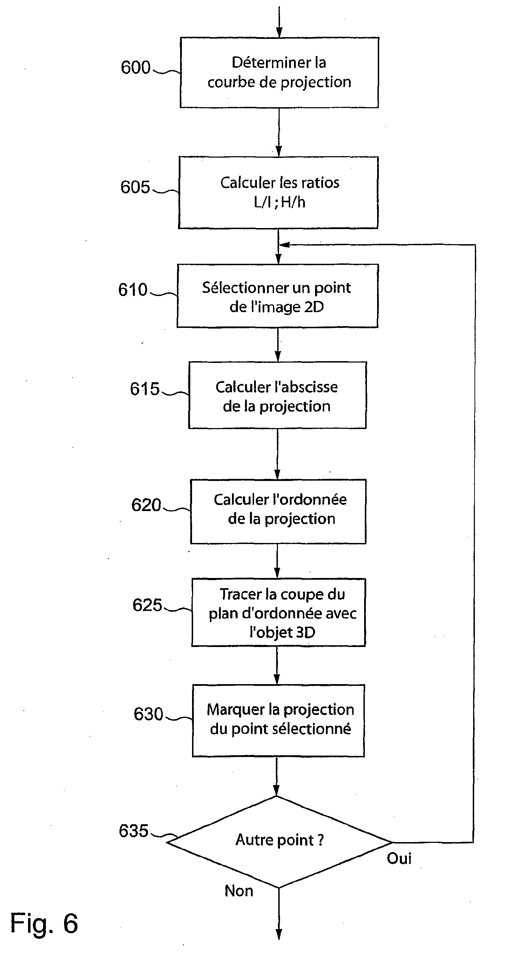

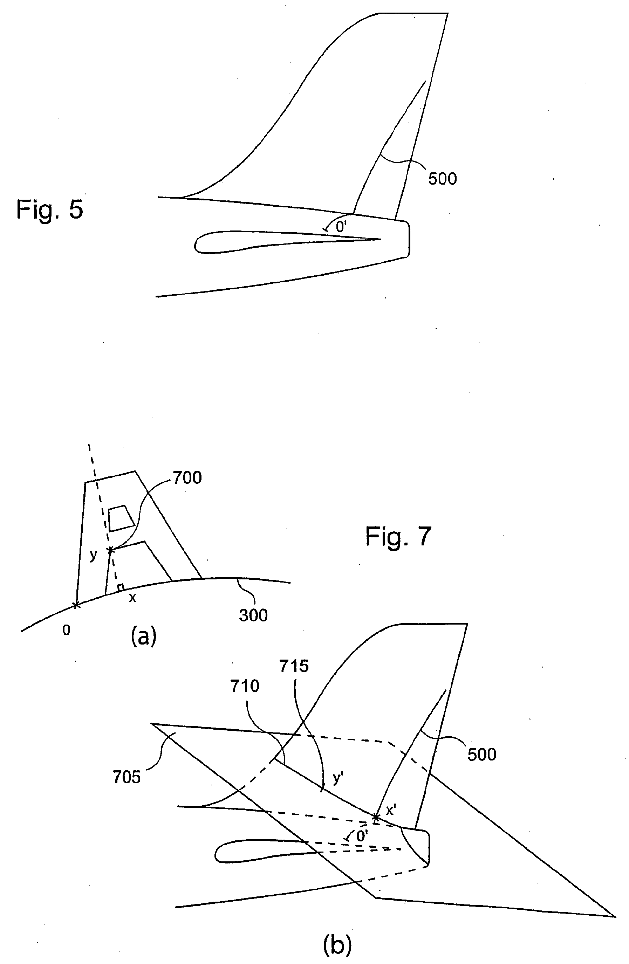

Selon un premier mode de réalisation, une courbe de projection est définie sur la surface de l'objet tridimensionnel. Cette courbe, comprenant une origine O', est utilisée comme axe de repère pour représenter l'abscisse de la projection des points échantillonnés de l'image source sur la surface de l'objet tridimensionnel. Cette courbe de projection peut être similaire à la courbe d'origine, elle peut être similaire avec une échelle différente ou elle peut être différente. La figure 5 illustre une représentation d'un avion sur laquelle a été tracée la courbe de projection (500). Un exemple de l'algorithme selon ce premier mode de réalisation est représenté schématiquement sur la figure 6.

Après avoir déterminé la courbe de projection sur la surface de l'objet tridimensionnel (étape 600), le ratio des longueurs des courbes d'origine (l) et de projection (L) est calculé (étape 605). Par défaut, le ratio des hauteurs de l'image source et de l'image projetée est égal à celui des longueurs des courbes d'origine et de projection. Cependant, l'utilisateur peut déterminer un autre ratio ou entrer la hauteur souhaitée de l'image projetée pour permettre le calcul du ratio des hauteurs de l'image source (h) et de l'image projetée (H). La hauteur H est de préférence une distance mesurée sur la surface de l'objet tridimensionnel et non une distance mathématique calculée dans l'espace tridimensionnel. Si la courbe de projection est identique à la courbe d'origine, le ratio est égal à un et il n'est pas nécessaire de le calculer. Alternativement, le ratio peut être déterminé par l'utilisateur. Un point de l'image source, de préférence un point échantillonné de l'image source, ayant (x,y) pour coordonnées, est sélectionné (étape 610). Ensuite, l'abscisse de la projection de ce point est calculée (étape 615). L'abscisse de la projection du point sélectionné est avantageusement définie par la relation suivante,

$$x' = x.\frac{L}{l}$$

où x est l'abscisse du point sélectionné de l'image d'origine selon la courbe d'origine et x' est l'abscisse de la projection du point sélectionné sur l'objet tridimensionnel selon la courbe de projection. Le rapport L/l peut être supprimé si le ratio est égal à 1 ou peut être remplacé par une variable déterminé par l'utilisateur.

De même, l'ordonnée de la projection du point sélectionné est calculée (étape 620). De façon similaire à l'abscisse, l'ordonnée de la projection du point sélectionné est avantageusement définie par la relation suivante,

$$y' = y.\frac{H}{h} \text{ ou } y' = y.\frac{L}{l}$$

où y est l'ordonnée du point sélectionné de l'image d'origine selon, de préférence, une droite orthogonale à la courbe d'origine en x et y' est l'ordonnée de la projection du point sélectionné sur la surface de l'objet tridimensionnel selon l'intersection d'un plan d'ordonnée avec la surface de l'objet tridimensionnel. Par défaut le ratio des hauteurs de l'image source et de l'image projetée est égal à celui des longueurs des courbes d'origine et de projection (H/h=L/l), il n'est donc pas systématiquement nécessaire de connaître la hauteur de l'image projetée sur l'objet tridimensionnel. A nouveau, le ratio peut être déterminé par l'utilisateur.

La courbe des ordonnées est déterminée, pour un point projeté ayant comme abscisse x', par l'intersection d'un plan de projection, ou plan d'ordonnée, passant par le point de la courbe de projection ayant x' comme abscisse avec la surface de l'objet tridimensionnel. Selon ce premier mode de réalisation, le plan d'ordonnée est défini comme étant normal à la courbe de projection en x'.

Pour déterminer la projection du point sélectionné, il faut donc reporter la valeur x' sur la courbe de projection à partir de son origine O', déterminer l'intersection du plan normal à la courbe de projection en ce point avec la surface de l'objet tridimensionnel et reporter la valeur de l'ordonnée sur la courbe formée par cette intersection (étapes 625 et 630).

Après avoir marqué la projection du point sélectionné sur l'objet tridimensionnel, un test est effectué pour déterminer si tous les points de l'échantillonnage ont été projetés (étape 635). Si tous les points de l'échantillonnage n'ont pas été projetés, un nouveau point est sélectionné (étape 610) et les étapes 615 à 635 sont répétées.

La figure 7, comprenant les figures 7a et 7b, illustre la projection d'un point de l'image d'origine illustrée sur la figure 3 sur un empennage vertical selon la courbe de projection 500 et selon le premier mode de réalisation. La figure 7a reprend une partie de la figure 3 sur laquelle les références et les coordonnées du point à projeter ont été ajoutées. Comme indiqué, le point 700 a pour coordonnées (x,y) dans le repère formé de la courbe d'origine et de la droite orthogonale à cette courbe au point d'abscisse x. La figure 7b reprend une partie de la figure 5. Après avoir déterminé l'abscisse x' de la projection du point 700 comme indiqué précédemment, la valeur x' est reportée sur la courbe de projection 500. L'intersection (710) entre le plan (700) normal à la courbe 500 au point d'abscisse x' de cette courbe avec la surface de l'objet tridimensionnel, ici l'empennage vertical, est tracé. L'ordonnée y' de la projection du point 700 est reportée sur la courbe d'intersection 710. Le point 715 ayant pour coordonnées (x',y') est la projection du point 700 sur la surface de l'objet tridimensionnel.

Selon un deuxième mode de réalisation, le plan 705 d'ordonnée est déterminé comme étant le plan parallèle à un plan de référence, ce plan parallèle à un plan de référence passant par le point d'abscisse x' de la courbe de projection. Le même plan de référence est utilisé pour la projection de la totalité des points de l'échantillonnage ou pour une partie de ces points. Le plan de référence est avantageusement choisi selon la forme de l'objet tridimensionnel et l'orientation du texte, du logo ou des symboles devant être projetés. Typiquement, le plan de référence est orthogonal ou parallèle à l'axe du fuselage d'un avion.

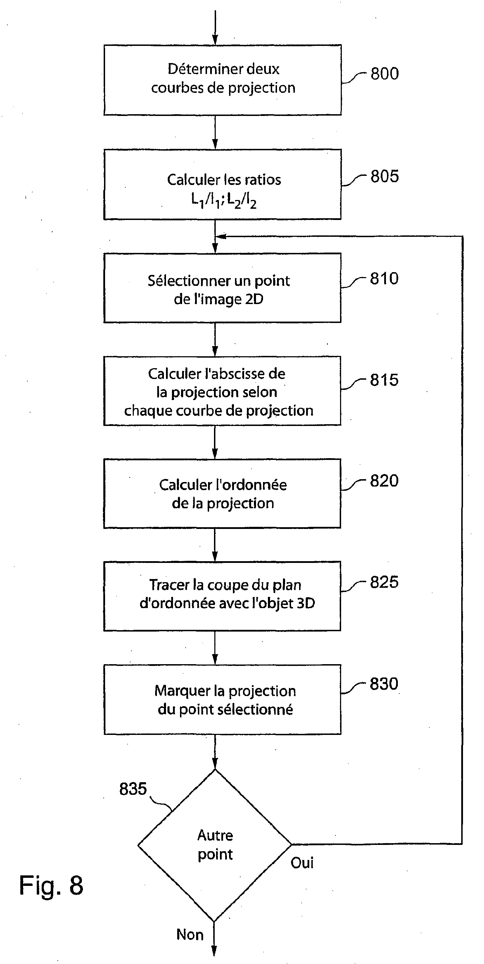

Selon un troisième mode de réalisation, le plan d'ordonnée est déterminé par deux points de la surface de l'objet tridimensionnel et une direction prédéterminée. Cette direction peut être définie automatiquement selon la nature de la surface de l'objet tridimensionnel ou peut être donnée par l'utilisateur. A cette fin, deux courbes d'origine sont définies sur l'image bidimensionnelle à projeter, par exemple une première courbe d'origine liée aux valeurs y minimales et une seconde courbe d'origine liée aux valeurs y maximales. Chaque courbe d'origine comprend une origine ($O_1$ et $O_2$). De même, deux courbes de projection sont définies sur la surface de l'objet tridimensionnel. Chaque courbe de projection comprend une origine ($O_1$' et $O_2$'). Ces deux courbes sont, de préférence, les limites inférieure et supérieure de la projection de l'image bidimensionnelle sur la surface de l'objet tridimensionnel. La figure 8 illustre certaines étapes d'un exemple de l'algorithme selon ce troisième mode de réalisation.

Après avoir déterminé deux courbes de projection sur la surface de l'objet tridimensionnel sur laquelle doit être projetée l'image bidimensionnelle (étape 800), le ratio des longueurs de la première courbe d'origine ($l_1$) et de la première courbe de projection ($L_1$) et le ratio des longueurs de la seconde courbe d'origine ($l_2$) et de la seconde courbe de projection ($L_2$) sont calculés (étape 805). Un point de l'image source, de préférence un point échantillonné de l'image source, est sélectionné (étape 810). Ensuite, l'abscisse de la projection de ce point est calculée pour chacune des deux courbes de projection (étape 815). Les abscisses des projections du point sélectionné sont avantageusement définies par les relations suivantes,

$$x_1' = x_1 . \frac{L_1}{l_1} \;\; ; \;\; x_2' = x_2 . \frac{L_2}{l_2}$$

où $x_1$ est l'abscisse du point sélectionné de l'image d'origine selon la première courbe d'origine, $x_2$ est l'abscisse du point sélectionné de l'image d'origine selon la seconde courbe d'origine, $x_1$' est l'abscisse de la projection du point sélectionné sur l'objet tridimensionnel selon la première courbe de projection, $x_2$' est l'abscisse de la projection du point sélectionné sur l'objet tridimensionnel selon la seconde courbe de projection, $l_1$ est la longueur de la première courbe d'origine, $l_2$ est la longueur de la seconde courbe d'origine, $L_1$ est la longueur de la première courbe de projection et $L_2$ est la longueur de la seconde courbe de projection.

L'abscisse $x_1$ est de préférence déterminée comme étant la projection orthogonale du point sélectionné sur la première courbe d'origine (comme dans les premier et second mode de réalisation). L'abscisse $x_2$ est de préférence déterminée par l'intersection de la droite passant par le point sélectionné et par le point de la première courbe d'origine ayant pour abscisse $x_1$ avec la seconde courbe de projection.

L'ordonnée du point sélectionné est avantageusement déterminée comme étant le ratio de la distance entre le point sélectionné et le point de la première courbe d'origine ayant pour abscisse $x_1$ et de la distance entre le point de la première courbe d'origine ayant pour abscisse $x_1$ et le point de la seconde courbe d'origine ayant

pour abscisse $x_2$. L'ordonnée du point sélectionné peut ainsi s'exprimer selon la relation suivante,

$$y = \frac{dist(Pt; X_1)}{dist(Pt; X_2)}$$

où Pt est le point sélectionné, $X_1$ est le point de la première courbe d'origine ayant pour abscisse $x_1$ et $X_2$ est le point de la seconde courbe d'origine ayant pour abscisse $x_2$.

L'ordonnée de la projection du point sélectionné est calculée (étape 820). L'ordonnée de la projection du point sélectionné est avantageusement définie par la relation suivante,

$$y' = y . \frac{D}{h}$$

où y est l'ordonnée du point sélectionné déterminé précédemment, y' est l'ordonnée de la projection du point sélectionné sur l'objet tridimensionnel selon l'intersection d'un plan d'ordonnée avec l'objet tridimensionnel, h est la hauteur de l'image d'origine et D est la distance entre les points des première et seconde courbes de projection ayant respectivement $x_1$' et $x_2$' comme abscisse, sur la surface de l'objet tridimensionnel. D représente donc la distance entre ces points selon l'intersection de l'objet tridimensionnel et du plan normal à la surface de cet objet passant par les points des première et seconde courbes de projection ayant respectivement $x_1$' et $x_2$' comme abscisse. La valeur y' représente donc la distance entre le point de la première courbe de projection ayant pour abscisse x'$_1$ et la projection du point sélectionné, sur la courbe des ordonnées.

La courbe des ordonnées est déterminée, pour un point ayant comme abscisse $x_1$' sur la première courbe de projection et pour un point ayant comme abscisse $x_2$' sur la seconde courbe de projection, par l'intersection d'un plan d'ordonnée passant par ces deux points et ayant une direction prédéterminée, avec la surface de l'objet tridimensionnel.

Pour déterminer la projection du point sélectionné, il faut donc reporter la valeur $x_1$' sur la première courbe de projection, reporter la valeur $x_2$' sur la seconde courbe de projection (selon les origines $O_1$' et $O_2$'), déterminer l'intersection du plan passant par ces deux points, selon la direction prédéterminée, avec la surface de l'objet tridimensionnel et reporter la valeur de l'ordonnée y' sur la courbe formée par cette intersection (étapes 825 et 830).

Après avoir marqué la projection du point sélectionné sur la surface de l'objet tridimensionnel, un test est effectué pour déterminer si tous les points de l'échantillonnage ont été projetés (étape 835). Si tous les points de l'échantillonnage n'ont pas été projetés, un nouveau point est sélectionné (étape 810) et les étapes 815 à 835 sont répétées.

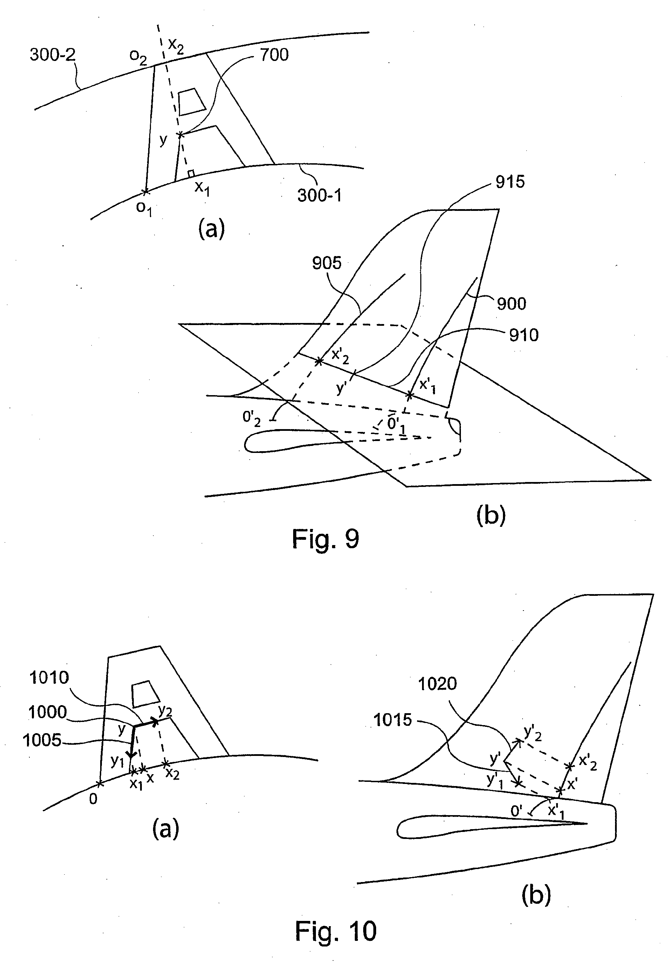

La figure 9, comprenant les figures 9a et 9b, illustre la projection d'un point de l'image d'origine illustrée sur la figure 3 sur un empennage vertical selon deux courbes de projection. La figure 9a, comme la figure 7a, reprend une partie de la figure 3 sur laquelle les références et les coordonnées du point à projeter ont été ajoutées. Comme illustré, deux courbes d'origine (300-1 et 300-2) sont utilisées. Le point sélectionné est le point 700 défini par les valeurs $x_1$, $x_2$ et y. La figure 9b illustre les deux courbes de projection 900 et 905. Après avoir déterminé l'abscisse $x_1'$ de la projection du point 700 selon la première courbe de projection, comme indiqué précédemment, la valeur $x_1'$ est reportée sur la courbe de projection 900 par rapport à l'origine $O_1'$. De même, après avoir déterminé l'abscisse $x_2'$ de la projection du point 700 selon la seconde courbe de projection, la valeur $x_2'$ est reportée sur la courbe de projection 905 par rapport à l'origine $O_2'$. L'intersection (910) entre le plan (915) passant par les points des courbes de projection marqués $x_1'$ et $x_2'$ et ayant une direction prédéterminée avec la surface de l'objet tridimensionnel, ici l'empennage vertical, est tracé. L'ordonnée y' de la projection du point 700 est reportée sur la courbe formée par l'intersection 910. Le point 915 est la projection du point 700 sur la surface de l'objet tridimensionnel selon le troisième mode de réalisation.

Le choix du type de projection selon les premier, second et troisième modes de réalisation est lié au type de motif à projeter et à la nature de la surface de l'objet tridimensionnel sur laquelle le motif bidimensionnel est projeté.

Comme mentionné précédemment, une étape supplémentaire de transfert de tangentes est avantageusement effectuée. Selon cette étape, de préférence au moins deux tangentes sont projetées pour chaque point échantillonné de l'image source. Chaque tangente est avantageusement déterminée par le point de tangence, c'est-à-dire le point échantillonné, et un second choisi de façon quelconque sur la tangente, de préférence à proximité du point échantillonné. La projection de ce second point selon la méthode décrite précédemment permet de construire la projection de la tangente sur la surface de l'objet tridimensionnel, permettant ainsi la construction de la projection de l'image source.

La figure 10, comprenant les figures 10a et 10b, illustre le mécanisme de projection de tangentes. La figure 10a représente une partie de l'image source à projeter sur laquelle un point échantillonné est sélectionné (point 1000). Le point 1000 a (x,y) pour coordonnées. Les tangentes à l'image source au point 1000 sont représentées par les vecteurs 1005 et 1010. Un point de coordonnées $(x_1,y_1)$ est choisi sur le vecteur 1005 et un point de coordonnées $(x_2,y_2)$ est choisi sur le vecteur 1010. La projection des points de coordonnées (x,y), $(x_1,y_1)$ et $(x_2,y_2)$ selon l'une des méthodes décrites précédemment permet d'obtenir les points de coordonnées (x', y'), $(x_1',y_1')$ et $(x_2',y_2')$, respectivement. Ces trois derniers points permettent de construire les vecteurs 1015 et 1020, correspondant à la projection des vecteurs 1005 et 1010, respectivement.

Lorsque les points et les tangentes ont été projetés, la projection de l'image source peut être construite en liant les points projetés selon la liaison des points échantillonnés et les tangentes. Cette reconstruction peut être réalisée à partir d'une fonction d'un logiciel de conception assistée par ordinateur adapté à lier des points selon des tangentes déterminées.

Avant la projection des points échantillonnés sur la surface de l'objet tridimensionnel, ou lors de cette projection, il est possible de transformer l'image source. Il est ainsi possible d'utiliser une matrice de transformation pour, par exemple, inverser horizontalement et/ou verticalement l'image source. Il est également possible d'appliquer un facteur d'échelle, linéaire ou non, et de façon plus générale, tous types de transformations d'image.

La projection de la représentation bidimensionnelle de la décoration sur la surface d'un objet tridimensionnel permet d'obtenir, de préférence, un fichier contenant les coordonnées des projections des points de la représentation bidimensionnelle de la décoration ainsi que les caractéristiques de ces points. Ces caractéristiques peuvent être, par exemple, la couleur associée à chaque point. Ce fichier peut être utilisé pour obtenir une visualisation de la projection sur un modèle numérique de l'objet tridimensionnel, par exemple en utilisant un logiciel de conception assistée par ordinateur. Le fichier peut également être utilisé pour tracer la projection directement sur l'objet tridimensionnel réel à décorer.

**Revendications**

1. Procédé pour projeter un motif bidimensionnel sur la surface d'un objet tridimensionnel, ce procédé comprenant les étapes suivantes,

- définition d'au moins une courbe d'origine sur ledit motif bidimensionnel et d'au moins une courbe de projection (500) sur ladite surface dudit objet tridimensionnel, lesdites au moins une courbes d'origine et de projection ayant chacune un point d'origine (O, $O_1$, $O_2$, O', $O_1'$, $O_2'$) ;
- détermination d'au moins un ratio de projection (605, 805) ;
- sélection d'un point dudit motif bidimensionnel (610, 810) ;
- détermination d'au moins une abscisse de la projection dudit point sélectionné selon au moins une abscisse dudit point sélectionné et selon ledit au moins un ratio de projection (615, 815) ;
- détermination de l'ordonnée de la projection dudit point sélectionné selon l'ordonnée dudit point sélectionné et selon ledit au moins un ratio de projection (620, 820) ; le procédé étant caratérisé en ce que il comprend les étapes de
- détermination d'un plan d'ordonnée comprenant le point de ladite au moins une courbe de projection déterminé par ladite au moins une abscisse de la projection dudit point sélectionné ; et,
- détermination de la projection dudit point sélectionné sur ladite surface dudit objet tridimensionnel selon ladite ordonnée de la projection dudit point sélectionné, l'intersection de ladite surface dudit objet tridimensionnel avec ledit plan d'ordonnée et ladite au moins une courbe de projection (625, 825).

2. Procédé selon la revendication 1 **caractérisé en ce que** l'ordonnée de la projection dudit point sélectionné est déterminée selon l'ordonnée dudit point sélectionné et un second ratio de projection (605, 805).

3. Procédé selon l'un quelconque des revendications 1 et 2 **caractérisé en ce qu'**il comprend en outre une étape de projection d'au moins une tangente audit motif bidimensionnel audit point sélectionné sur ladite surface dudit objet tridimensionnel (410).

4. Procédé selon l'une quelconque des revendications 1 à 3 **caractérisé en ce que** ledit plan d'ordonnée est normal à ladite au moins une courbe de projection.

5. Procédé selon l'une quelconque des revendications 1 à 3 **caractérisé en ce que** ledit plan d'ordonnée est parallèle à un plan de référence.

6. Procédé selon l'une quelconque des revendications 1 à 3 **caractérisé en ce que** ledit plan d'ordonnée comprend la projection de l'abscisse du point sélectionné selon une seconde courbe de projection appartenant à ladite surface dudit objet tridimensionnel, ledit plan d'ordonnée étant défini par une direction prédéterminée.

7. Procédé selon la revendication 6 **caractérisé en ce que** ledit point sélectionné est défini par deux abscisses selon deux courbes d'origine et **en ce que** la projection dudit point sélectionné est définie par deux abscisses selon deux courbes de projection.

8. Procédé selon la revendication 7 **caractérisé en ce que** l'ordonnée de la projection du point sélectionné est définie, en particulier, par le ratio des distances entre ledit point sélectionné et les points desdites deux courbes d'origine déterminés par lesdites deux abscisses dudit point sélectionné.

9. Procédé pour projeter un motif bidimensionnel sur la surface d'un objet tridimensionnel, ce procédé étant **caractérisé en ce qu'**au moins un premier point dudit motif bidimensionnel est projeté sur ladite surface dudit objet tridimensionnel selon le procédé de la revendication 4 et ce qu'au moins un second point dudit motif bidimensionnel est projeté sur ladite surface dudit objet tridimensionnel selon le procédé de l'une quelconque des revendications 5 à 8.

10. Procédé pour projeter un motif bidimensionnel sur la surface d'un objet tridimensionnel, ce procédé étant **caractérisé en ce qu'**au moins un premier point dudit motif bidimensionnel est projeté sur ladite surface dudit objet tridimensionnel selon le procédé de la revendication 5 et ce qu'au moins un second point dudit motif bidimensionnel est projeté sur ladite surface dudit objet tridimensionnel selon le procédé de l'une quelconque des revendications 4, 6, 7 et 8.

11. Procédé selon l'une quelconque des revendications précédentes **caractérisé en ce qu'**il comprend en outre une étape de transformation dudit motif bidimensionnel.

12. Procédé selon l'une quelconque des revendications précédentes **caractérisé en ce que** ledit objet tridimensionnel est un objet numérique ou un objet réel.

**Patentansprüche**

1. Verfahren zum Projizieren eines zweidimensionalen Musters auf die Oberfläche eines dreidimensionalen Gegenstands, wobei dieses Verfahren die nachfolgenden Schritte umfasst:

    - Deimieren von zumindest einer Ausgangskurve auf dem zweidimensionalen Muster und von zumindest einer Projektionskurve (500) auf der Oberfläche des dreidimensionalen Gegenstands, wobei die zumindest eine Ausgangskurve und die zumindest eine Projektionskurve jeweils einen Ausgangspunkt (O, $O_1$, $O_2$, O', $O'_1$, $O'_2$) haben,
    - Bestimmen von zumindest einem Projektionsverhältnis (605, 805),
    - Auswählen eines Punktes des zweidimensionalen Musters (610, 810);
    - Bestimmen zumindest einer Abszisse der Projektion des ausgewählten Punktes gemäß zumindest einer Abszisse des ausgewählten Punktes und gemäß dem zumindest einen Projektionsverhältnis (615, 815);
    - Bestimmen der Ordinate der Projektion des ausgewählten Punkts gemäß der Ordinate des ausgewählten Punktes und gemäß dem zumindest einen Projektionsverhältnis (620, 820);

wobei das Verfahren **dadurch gekennzeichnet ist, dass** es die Schritte umfasst:

- Bestimmen einer Ordinatenebene, die den Punkt der zumindest einen Projektionskurve enthält, der von der zumindest einen Abszisse der Projektion des ausgewählten Punktes bestimmt wird; und
- Bestimmen der Projektion des ausgewählten Punktes auf die Oberfläche des dreidimensionalen Gegenstands gemäß der Ordinate der Projektion des ausgewählten Punktes, dem Schnittpunkt der Oberfläche des dreidimensionalen Gegenstands mit der Ordinatenebene und der zumindest einen Projektionskurve (625, 825).

2. Verfahren nach Anspruch 1,
   **dadurch gekennzeichnet, dass** die Ordinate der Projektion des ausgewählten Punktes gemäß der Ordinate des ausgewählten Punktes und einem zweiten Projektionsverhältnis (605, 805) bestimmt wird.

3. Verfahren nach einem der Ansprüche 1 und 2,
   **dadurch gekennzeichnet, dass** es ferner einen Schritt der Projektion zumindest einer Tangente an das zweidimensionale Muster zum ausgewählten Punkt auf die Oberfläche des dreidimensionalen Gegenstands (410) umfasst.

4. Verfahren nach einem der Ansprüche 1 bis 3,
   **dadurch gekennzeichnet, dass** die Ordinatenebene normal zu der zumindest einen Projektionskurve verläuft.

5. Verfahren nach einem der Ansprüche 1 bis 3,
   **dadurch gekennzeichnet, dass** die Ordinatenebene parallel zu einer Bezugsebene verläuft.

6. Verfahren nach einem der Ansprüche 1 bis 3,
   **dadurch gekennzeichnet, dass** die Ordinatenebene die Projektion der Abszisse des ausgewählten Punktes gemäß einer zweiten Projektionskurve umfasst, die zu der Oberfläche des dreidimensionalen Gegenstands gehört, wobei die Ordinatenebene von einer vorbestimmten Richtung definiert wird.

7. Verfahren nach Anspruch 6,
   **dadurch gekennzeichnet, dass** der ausgewählte Punkt von zwei Abszissen gemäß zwei Ausgangskurven definiert wird und dadurch dass die Projektion des ausgewählten Punktes von zwei Abszissen gemäß zwei Projektionskurven definiert wird.

8. Verfahren nach Anspruch 7,
   **dadurch gekennzeichnet, dass** die Ordinate der Projektion des ausgewählten Punktes insbesondere von dem Verhältnis der Abstände zwischen dem ausgewählten Punkt und den Punkten der beiden Ausgangskurven definiert wird, die von den beiden Abszissen des ausgewählten Punktes bestimmt werden.

9. Verfahren zum Projizieren eines zweidimensionalen Musters auf die Oberfläche eines dreidimensionalen Gegenstands, wobei dieses Verfahren **dadurch gekennzeichnet ist, dass** zumindest ein erster Punkt des zweidimensionalen Musters auf die Oberfläche des dreidimensionalen Gegenstands gemäß dem Verfahren nach Anspruch 4 projiziert wird und dadurch, dass zumindest ein zweiter Punkt des zweidimensionalen Musters auf die Oberfläche des dreidimensionalen Gegenstands gemäß dem Verfahren nach einem der Ansprüche 5 bis 8 projiziert wird.

10. Verfahren zum Projizieren eines zweidimensionalen Musters auf die Oberfläche eines dreidimensionalen Gegenstands, wobei dieses Verfahren **dadurch gekennzeichnet ist, dass** zumindest ein erster Punkt des zweidimensionalen Musters auf die Oberfläche des dreidimensionalen Gegenstands gemäß dem Verfahren nach Anspruch 5 projiziert wird und dadurch, dass zumindest ein zweiter Punkt des zweidimensionalen Musters auf die Oberfläche des dreidimensionalen Gegenstands gemäß dem Verfahren nach einem der Ansprüche 4, 6, 7 und 8 projiziert wird.

11. Verfahren nach einem der vorangehenden Ansprüche,
    **dadurch gekennzeichnet, dass** es ferner einen Schritt einer Transformation des zweidimensionalen Musters umfasst.

12. Verfahren nach einem der vorangehenden Ansprüche,
    **dadurch gekennzeichnet, dass** der dreidimensionale Gegenstand ein digitales Objekt oder ein reeller Gegenstand ist.

**Claims**

1. A method for projecting a two-dimensional pattern onto the surface of a three-dimensional object, this method comprising the following steps,

   - defining at least one original curve on the said two-dimensional pattern and at least one projection curve (500) on the said surface of the said three-dimensional object, the said at least one original and projection curve each having a point of origin (O, $O_1$, $O_2$, O', $O_1$', $O_2$')
   - determining at least one projection ratio (605, 805);

- selecting a point of the said two-dimensional pattern (610, 810);
- determining at least one abscissa of the projection of the said selected point according to at least one abscissa of the said selected point and according to the said at least one projection ratio (615, 815);
- determining the ordinate of the projection of the said selected point according to the ordinate of the said selected point and according to the said at least one projection ratio (620, 820); the method being **characterized in that** it comprises the following steps :
- determining an ordinate plane comprising the point of the said at least one projection curve determined by the said at least one abscissa of the projection of the said selected point; and
- determining the projection of the said selected point onto the said surface of the said three-dimensional object according to the said ordinate of the projection of the said selected point, the intersection of the said surface of the said three-dimensional object with the said ordinate plane and the said at least one projection curve (625, 825).

2. A method according to claim 1, **characterized in that** the ordinate of the projection of the said selected point is determined according to the ordinate of the said selected point and a second projection ratio (605, 805).

3. A method according to any one of claims 1 and 2, **characterized in that** it further comprises a step of projecting at least one tangent to the said two-dimensional pattern at the said selected point onto the said surface of the said three-dimensional object (410).

4. A method according to any one of claims 1 to 3, **characterized in that** the said ordinate plane is normal to the said at least one projection curve.

5. A method according to any one of claims 1 to 3, **characterized in that** the said ordinate plane is parallel to a reference plane.

6. A method according to any one of claims 1 to 3, **characterized in that** the said ordinate plane comprises the projection of the abscissa of the selected point according to a second projection curve belonging to the said surface of the said three-dimensional object, the said ordinate plane being defined by a predetermined direction.

7. A method according to claim 6, **characterized in that** the said selected point is defined by two abscissas according to two original curves and **in that** the projection of the said selected point is defined by two abscissas according to two projection curves.

8. A method according to claim 7, **characterized in that** the ordinate of the projection of the selected point is defined in particular by the ratio of the distances between the said selected point and the points of the said two original curves determined by the said two abscissas of the said selected point.

9. A method for projecting a two-dimensional pattern onto the surface of a three-dimensional object, this method being **characterized in that** at least one first point of the said two-dimensional pattern is projected onto the said surface of the said three-dimensional object according to the method of claim 4, and **in that** at least one second point of the said two-dimensional pattern is projected onto the said surface of the said three-dimensional object according to the method of any one of claims 5 to 8.

10. A method for projecting a two-dimensional pattern onto the surface of a three-dimensional object, this method being **characterized in that** at least one first point of the said two-dimensional pattern is projected onto the said surface of the said three-dimensional object according to the method of claim 5, and **in that** at least one second point of the said two-dimensional pattern is projected onto the said surface of the said three-dimensional object according to the method of any one of claims 4, 6, 7 and 8.

11. A method according to any one of the preceding claims, **characterized in that** it further comprises a step of transforming the said two-dimensional pattern.

12. A method according to any one of the preceding claims, **characterized in that** the said three-dimensional object is a digital object or a real object.

Fig. 1

Fig. 3

Fig. 2

EP 2 097 274 B1

400 — Echantillonage de l'image 2D ← Image 2D

405 — Projection des points échantillonés → Objet 3D

410 — Projection des tangentes

415 — Construction de l'image

# Fig. 4

```
┌─────────────────────┐
600 ──│ Déterminer la       │
      │ courbe de projection │
      └─────────────────────┘
                │
                ▼
      ┌─────────────────────┐
605 ──│ Calculer les ratios │
      │ L/l ; H/h           │
      └─────────────────────┘
                │
                ▼
      ┌─────────────────────┐
610 ──│ Sélectionner un point│
      │ de l'image 2D       │
      └─────────────────────┘
                │
                ▼
      ┌─────────────────────┐
615 ──│ Calculer l'abscisse │
      │ de la projection    │
      └─────────────────────┘
                │
                ▼
      ┌─────────────────────┐
620 ──│ Calculer l'ordonnée │
      │ de la projection    │
      └─────────────────────┘
                │
                ▼
      ┌─────────────────────┐
      │ Tracer la coupe du  │
625 ──│ plan d'ordonnée avec│
      │ l'objet 3D          │
      └─────────────────────┘
                │
                ▼
      ┌─────────────────────┐
630 ──│ Marquer la projection│
      │ du point sélectionné │
      └─────────────────────┘
                │
                ▼
635 ──   ◇ Autre point ? ◇ ──── Oui
                │
               Non
```

# Fig. 6

Fig. 5

500

0'

Fig. 7

700

y

x

0

300

(a)

715

710

705

500

y'

x'

0'

(b)

```
            │
            ▼
┌──────────────────────────┐
│    Déterminer deux       │ ⟋ 800
│   courbes de projection  │
└──────────────────────────┘
            │
            ▼
┌──────────────────────────┐
│   Calculer les ratios    │ ⟋ 805
│   $L_1/l_1 ; L_2/l_2$    │
└──────────────────────────┘
            │
            ▼
┌──────────────────────────┐
│   Sélectionner un point  │ ⟋ 810
│     de l'image 2D        │
└──────────────────────────┘
            │
            ▼
┌──────────────────────────┐
│   Calculer l'abscisse de │ ⟋ 815
│    la projection selon   │
│  chaque courbe de projection │
└──────────────────────────┘
            │
            ▼
┌──────────────────────────┐
│    Calculer l'ordonnée   │ ⟋ 820
│     de la projection     │
└──────────────────────────┘
            │
            ▼
┌──────────────────────────┐
│   Tracer la coupe du plan│ ⟋ 825
│  d'ordonnée avec l'objet 3D │
└──────────────────────────┘
            │
            ▼
┌──────────────────────────┐
│    Marquer la projection │ ⟋ 830
│    du point sélectionné  │
└──────────────────────────┘
            │
            ▼
        ◇ Autre
   835   point      Oui ──────┐
        ◇
        │
       Non
        ▼
```

Fig. 8

Fig. 9

Fig. 10

17

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0593340 A